# EUROPÄISCHE PATENTSCHRIFT

(11) **EP 1 040 746 B1**
(45) Veröffentlichungstag und Bekanntmachung des Hinweises auf die Patenterteilung: **04.06.2003**
(21) Anmeldenummer: 00105737.1
(22) Anmeldetag: 17.03.2000
(51) Int. Cl.: A01D 45/02

(54) **Vorrichtung zum Pflücken von Fruchtständen**
Device for harvesting fruit on stalks
Appareil pour récolter les fruits sur pied

(30) Priorität: 30.03.1999 DE 19914321
(43) Veröffentlichungstag der Anmeldung: 04.10.2000
(73) Patentinhaber: CLAAS Saulgau GmbH, 88340 Bad Saulgau (DE)
(72) Erfinder: Boll, Ulrich, 88348 Bad Saulgau (DE); Kozlowski, Joachim, 56567 Neuwied (DE); Rauch, Hans, 88348 Bad Saulgau (DE)

(56) Entgegenhaltungen:
- EP-A- 0 355 441
- WO-A-00/30427
- US-A- 3 429 111
- US-A- 5 404 699

## Beschreibung

Die Erfindung betrifft eine Vorrichtung zum Pflücken von Fruchtständen stengeliger Erntegüter, wie Mais oder dergleichen, gemäß dem Oberbegriff des Patentanspruchs 1.
Die europäische Patentschrift EP 0 369 440 offenbart eine gattungsgleiche Vorrichtung zum Pflücken der Fruchtstände stengeliger Erntegüter, wobei die paarweise zusammenarbeitenden Pflück- und Gegenwalzen über mit dem Walzengrundkörper verschraubte Mitnahmeelemente verfügen, die aufgrund der unterschiedlichen Umfangsgeschwindigkeit zwischen Pflück- und Gegenwalze ein Quetschen und Knicken der durch die Mitnahmeelemente beförderten Halmgutstengel hervorrufen. Durch die zum Teil in ihrem unteren Bereich stark verholzten Halmgutstengel tritt an den Mitnahmeelementen ein starker Verschleiß auf, der einen regelmäßigen Austausch der Mitnahmeelemente erfordert. Gemäß der offenbarten Ausführung, erfordert der Austausch der Mitnahmeelemente einen hohen Umbauaufwand, da stets die gesamte Schraubverbindung entfernt werden muß, bevor das jeweilige Mitnahmeelement von der Pflückwalze abgenommen werden kann. Da der Verschleiß stets nur an der radial außenliegenden Kante der Mitnahmeelemente auftritt, die Mitnahmeelemente aber weit über den Walzengrundkörper hinausragen, wird bei ihrem verschleißbedingten Austausch stets auch ein großer Anteil nichtverschlissenen Materials "verbraucht". Aus der Praxis sind aber auch Ausführungen gemäß der europäischen Patentschrift EP 0 486 887 bekannt, deren paarweise zusammenarbeitenden Pflück- und Gegenwalzen so ausgebildet sind, daß die Gegenwalze über fest mit deren Grundkörper verschweißte Mitnehmer verfügt, während die Pflückwalze mit Mitnahmeelementen versehen ist, die in Aussparungen des Walzengrundkörpers eingelassen sind und im rückwärtigen Bereich an Stützelementen des Walzengrundkörpers anliegen. Damit stets ein sicheres Anliegen der Mitnahmeelemente an den Stützelementen gewährleistet ist und gutflußstörende Schraubverbindungen im Frontbereich der Mitnahmeelemente vermieden werden, sind die Mitnahmeelemente in der Praxis mit den Stützelementen vernietet. Sowohl Schweiß- als auch Nietverbindungen lassen sich nicht auf einfache Weise und ohne Zerstörung wenigstens eines Teils der miteinander verbundenen Elemente trennen, so daß auch bei einer derartigen Ausführung ein verschleißbedingter Wechsel der Mitnahmeelemente zu einem erheblich Montageaufwand und damit zu hohen Wartungskosten führt.

Es sind bereits eckige Pflückwalzen bekannt, wobei die Pflückwalzen als Anlageflächen für daran lösbar angeschraubte Schneidelemente ausgebildet sind (US-A-3,429,111).

Der Erfindung liegt deshalb die Aufgabe zugrunde, eine Vorrichtung zum Pflücken von Fruchtständen stengeliger Erntegüter gemäß dem Oberbegriff des Anspruchs 1 vorzuschlagen, bei der der Aufwand zur Montage bzw. Demontage der Schneidelemente deutlich verringert wird.

Erfindungsgemäß wird die Aufgabe durch eine Vorrichtung zum Pflücken von Fruchtständen stengeliger Erntegüter mit den kennzeichnenden Merkmalen des Anspruchs 1 gelöst.

Indem die Mitnahmerippe ein den Erntegutstengel sowohl schneidendes als auch quetschendes und knickendes Schneidelement lösbar aufnimmt, kann bei verschleißbedingt notwendigem Wechsel des Schneidelementes dies auf einfache Weise und ohne Verwendung von Spezialwerkzeug kostengünstig am Einsatzort des Pflückvorsatzes erfolgen. Im einfachsten Fall kann hierfür eine Schraubverbindung zwischen der Mitnahmerippe und dem Schneidelement vorgesehen sein.

Eine vorteilhafte Weiterbildung der Erfindung wird dann erreicht, wenn die lösbare Verbindung zwischen Mitnahmerippe und Schneidelement durch eine Klemmverbindung realisiert wird, die aufgrund ihrer großen Kontaktfläche zum Schneidelement eine sicherere Fixierung des Schneidelementes an der Mitnahmerippe gewährleistet und deren Verstellelemente nicht im Bereich der Mitnahmerippe und des Schneidelementes angeordnet sind. Auf diese Weise werden Gutverstopfungen im Bereich der Mitnahmerippen vermieden. Zudem verbessert sich der Zugang zu den in radialer Richtung in den Walzengrundkörper eingelassenen Verstellelementen.

Durch die gegenüber der Anlagekante der Mitnahmerippe geneigt angeordnete Klemmfläche des Klemmstücks wird auf konstruktiv einfache Weise sichergestellt, daß das Einschrauben oder Herausdrehen bereits bei geringer Verdrehung der Verstellelemente zum Klemmen oder zum Lösen der Klemmverbindung zwischen Schneidelement und Mitnahmerippe führt.

Zur Verringerung der für die Stengeldeformation notwendigen Kräfte, kann die den Stengel bearbeitende Kante der Schneidelemente als Schneidkante ausgeführt sein, wobei über die Form der Schneide eine Anpassung an unterschiedliche Ernteguteigenschaften erfolgen kann. In vorteilhafter Weise kann die Schneidkante deshalb als einfacher keilförmiger Anschliff oder aber als reliefartige, Kerben oder Sägezähne aufweisende Schneidkante ausgerührt sein. Zur Erhöhung der Standzeit eines Schneidelementes kann dieses auch beidseitig eine derartige Schneidkante aufweisen, so daß bei verschlissener erster Schneidkante das jeweilige Schneidelement ein weiters mal verwendet werden kann, bevor es ausgetauscht werden muß. Auf diese Weise verringert sich auch die Zahl der ständig vorzuhaltenden und während des Einsatzes mitzuführenden Schneidelemente.

Da der Verschleiß der Schneidelemente im in Fahrtrichtung vorn liegenden Bereich aufgrund des in der Regel im unteren Bereich verholzten Stengels größere ist, wird in einer weiteren vorteilhaften Ausführung vorgeschlagen, die Schneidelemente mehrteilig auszuführen, wobei die einzelnen Teile unabhängig voneinander austauschbar sind, so daß stets nur der Bereich der Schneidelemente ausgetauscht werden muß, der auch verschlissen ist.

In einer weiteren vorteilhaften Ausführungsform kann unter Inkaufnahme höherer Kosten bei verschleißbedingtem Austausch die Mitnahmerippe in ihrem radial äußeren Bereich direkt als Schneidkante ausgeführt sein, so daß man eine in der Herstellung kostengünstigere Pflückwalzenausführung erhält.

Je nachdem in welchem Bereich der Pflückwalze und wie intensiv die Schneidfunktion gewünscht wird, ist in einer weiteren vorteilhaften Ausgestaltung die Anordnung von kostenintensiveren Schneidelementen variabel gestaltbar. So müssen einerseits nicht alle Mitnahmerippen mit Schneidelementen versehen werden und andererseits können die Schneidelemente nur in einem bestimmten Bereich oder mit Unterbrechungen entlang einer Mitnahmerippe angeordnet sein.

In einer weiteren vorteilhaften Ausführung kann wenigstens die Schneidkante der Schneidelemente oberflächenbeschichtet sowie gehärtet sein, wodurch in an sich bekannter Weise eine weitere Erhöhung der Standzeit der jeweiligen Schneidkante erreichbar ist. Zudem kann die Standzeit der Schneidelemente durch den Einsatz von Hartmetall, oberflächenharter keramischer Werkstoffe oder oberflächenhartem Kunststoff weiter verlängert werden.

Vorteilhafte Ausgestaltungen sind Gegenstand weiterer Unteransprüche.und werden anhand eines in Zeichnungen dargestellten Ausführungsbeispiels näher erläutert.

Es zeigen
- Figur 1: den Schnitt durch paarweise zusammenarbeitende erfindungsgemäße Pflückwalzen

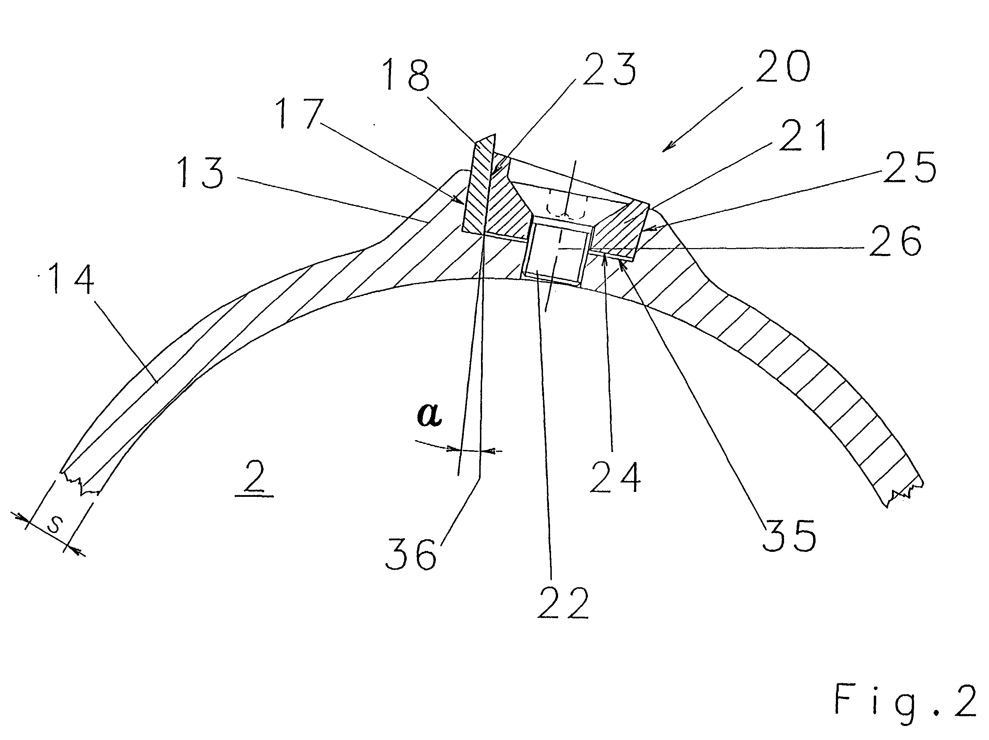

- Figur 2: eine vergrößerte Schnittdarstellung der Klemmverbindung nach Figur 1
- Figur 4: die erfindungsgemäßen Pflückwalzen nach Figur 1 in der Draufsicht
- Figur 5: eine Ausführungsform eines erfindungsgemäßen Schneidelementes
- Figur 6: eine weitere Ausführungsform eines erfindungsgemäßen Scheidelementes.

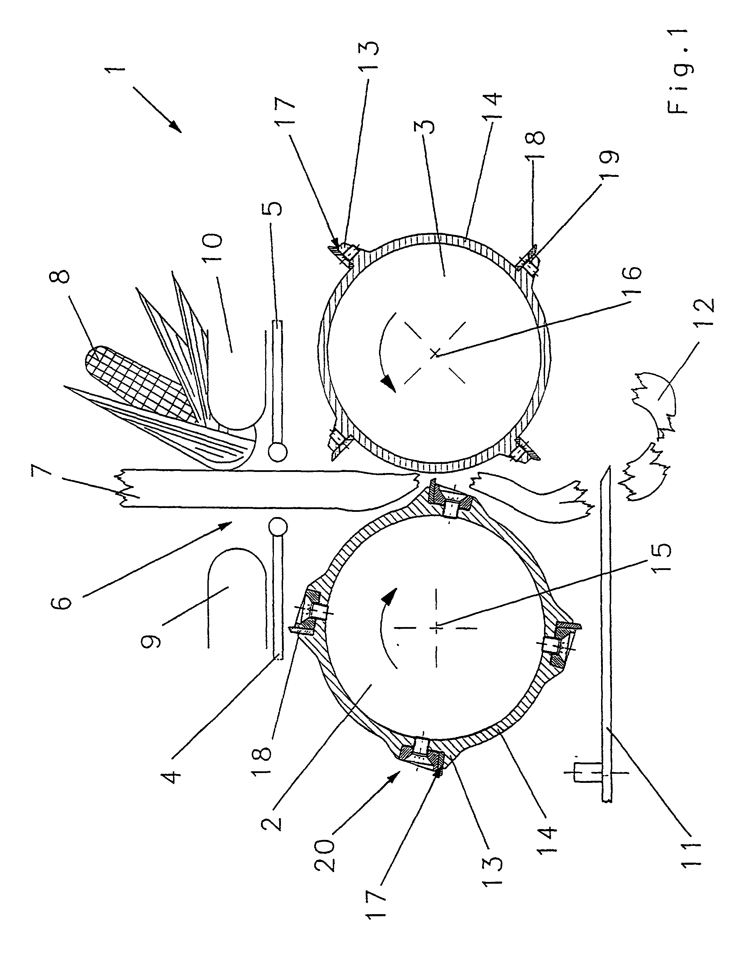

In Figur 1 ist der Schnitt durch eine aus paarweise zusammenarbeitenden Pflückwalzen 2, 3 bestehende Pflückeinheit 1 dargestellt, wobei den zusammenarbeitenden Pflückwalzen 2, 3 obenseitig ein durch verschiebbare oder ortsfeste Pflückspaltplatten 4, 5 gebildeter Pflückspalt 6 zugeordnet ist, durch den der Erntegutstengel 7 mittels der Pflückwalzen 2, 3 gezogen wird. Dabei werden die Fruchtstände 8 des Emtegutstengels 7 im Bereich des Pflückspaltes 6 an den Pflückspaltplatten 4, 5 abgestriffen und in an sich bekannter Weise durch oberhalb des Pflückspaltes 6 angeordnete Förderketten 9, 10 in den rückwärtigen Bereich der Pflückwalzen 4, 5 transportiert, wo sie weiteren nicht näher dargestellten Arbeitsorganen der wenigstens eine Pflückeinheit 1 aufnehmenden ebenfalls nicht näher dargestellten Vorrichtung zum Pflücken von Fruchtständen 8 stengeliger Erntegüter 7 übergeben werden. Untenseitig kann den erfindungsgemäßen Pflückwalzen 2, 3 wenigstens eine Häckseleinrichtung 11 zugeordnet sein, die den durch die Pflückwalzen 2, 3 bereits mechanisch bearbeiteten Erntegutstengel 7 vollständig zerkleinert und die entstehenden Häckselgutstücke 12 gleichmäßig auf dem Boden verteilt.

Die erfindunggemäßen Pflückwalzen 2, 3 werden von einem Walzengrundkörper 14 gebildet, dessen Mitnahmerippen 13 so gestaltet sind, daß sie in Achsrichtung 15, 16 der Pflückwalzen 2, 3 über eine Anlagefläche 17 verfügen. Jede der Anlageflächen 17 steht in Wirkverbindung mit dem erfindungsgemäßen Schneidelement 18, das im einfachsten Fall über Schraubverbindungen 19 mit der Mitnahmerippe 13 des Walzengrundkörpers 14 der Pflückwalze 3 verbunden ist, wobei durch den Einsatz von an sich bekannten Senkschrauben sichergestellt werden kann, daß die Schraubverbindung 19 den Gutfluß im Bereich der Schneidelemente 18 nicht behindert. Da bei einer derartigen Verbindung des Schneidelementes 18 mit der Mitnahmerippe 13 die erreichbare Flächenpressung begrenzt ist, wird in einer weiteren erfindungsgemäßen Ausführung eine Klemmverbindung 20 vorgeschlagen, die das Schneidelement 18 gegen die Anlagefläche 17 der Mitnahmerippe 13 der Pflückwalze 2 preßt. Die Klemmverbindung 20 wird dabei von einem Klemmteil 21 gebildet, welches mittels im einfachsten Fall als Senkschraube 22 ausgeführten Verbindungselementen im Walzengrundkörper 14 lösbar befestigt ist. Zur Realisierung der Klemmwirkung verfügt das Klemmstück 21 über wenigstens eine Klemmfläche 23, die in radial zum "Walzengrundkörper 14 verlaufender Richtung um einen Winkel α geneigt ausgeführt ist. Zur Erhöhung der Klemmwirkung kann Klemmstück 21 über eine weitere Klemmfläche 25 verfügen, die in analoger Weise zu Klemmfläche 23 in radialer Richtung zum Walzengrundkörper 14 geneigt ist und in Wirkverbindung mit dem Walzengrundkörper 14 steht.. Zudem kann eine weitere Steigerung der Klemmwirkung auch dadurch erzielt werden, daß die dem Klemmstück 21 zugewandte Seite des Schneidelements 18 ebenfalls zur Radialen 36 des Walzengrundkörpers 14 geneigt ausgeführt ist. Wird nun das wenigstens eine Verbindungselement 22 in den Walzengrundkörper 14 hineingeschraubt oder aus diesem herausgedreht, verschiebt sich die Klemmfläche 23 entlang der ihr zugewandten und in radialer Richtung verlaufenden Seite des Schneidelementes 18, welches mit seiner dem Klemmstück 21 abgewandten Seite an der Anlagefläche 17 der entsprechenden Mitnahmerippe 13 flächig anliegt. In gleicher Weise verschiebt sich die Klemmfläche 25 gegen die ihr zugewandte Seite des Walzengrundkörpers 14 in Richtung der Radialen 36. Dabei wird je nach Drehrichtung des Verbindungselementes 22 die Pressung des Schneidelementes 18 gegen die Mitnahmerippe 13 erhöht oder gelockert. Damit das an seiner Unterseite 24 eben ausgeführte Klemmstück 21 beabstandet zum Walzengrundkörper 14 angeordnet ist, verfügt der Walzengrundkörper 14 im Bereich des Klemmstücks 21 über eine flächig ausgeführte Aussparung 35, wobei diese Aussparung 35 im einfachsten Fall durch Fräsen aus dem Walzengrundkörper 14 herausgearbeitet sein kann. Zur Verbesserung der Klemmwirkung des Klemmstücks 21 durchsetzen die Verbindungselemente 22 das Klemmstück 21 und den Walzengrundkörper 14 gemäß Achse 26 in einer zur Radialen 36 des Walzengrundkörpers 14 geneigten Richtung. Damit der innerhalb des Walzengrundkörpers 14 befindliche Freiraum für nicht näher dargestellte Antriebs- und Lagersysteme genutzt werden kann, ist die Wandstärke S des Walzengrundkörpers 14 so auf die Länge der Verbindungselemente 22 abgestimmt, daß die Verbindungselemente 22 mit ihrem untenseitigen Ende nicht innenseitig aus dem Walzengrundkörper 14 herausragen.

Die Ausrüstung der paarweise zusammenarbeitenden Pflückwalzen 2 und 3 mit unterschiedlichen Verbindungssystemen 19, 20 zwischen Schneidelement 18 und Mitnahmerippe 13 wurde nur aus beschreibungsvereinfachenden Gründen gewählt. Die dargestellten Pflückwalzen 2 und 3 können demnach auch beide entweder mit der Klemmverbindung 20 oder der Schraubverbindung 19 versehen sein. Durch die Befestigung der Schneidelemente 18 mittels der erfindungsgemäßen Schraub- und/oder Klemmverbindung 19, 20 an den Mitnahmerippen 13 der entsprechenden Walzengrundkörpern 14 wird sichergestellt, daß ein verschleißbedingter Wechsel der Schneidelemente 18 ohne Spezialwerkzeug und auf einfache Weise vor Ort, daß heißt während des Einsatzes auf dem Feld in kurzer Zeit vorgenommen werden kann, so daß sich der Wartungsaufwand und die dabei entstehenden Kosten gegenüber herkömmlichen Vorrichtung zum Ernten der Fruchstände 8 stengeliger Emtegüter 7 erheblich verringern oder ihr Austausch vor Ort überhaupt erst möglich wird.

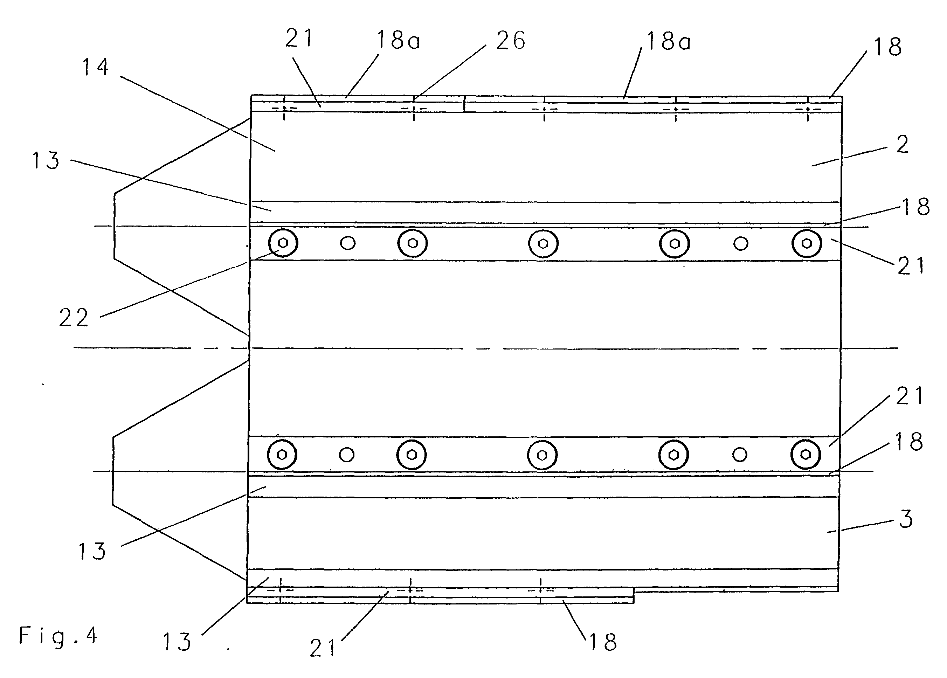

In Abhängigkeit von dem gewünschten Zerkleinerungsgrad der durch die Pflückwalzen 2, geförderten Erntegutstengel 7, können wahlweise nur eine, mehrer oder alle Mitnahmerippen 13 einer Pflückwalze 2, 3 mit Schneidelementen 18 versehen sein, wobei sich die Schneidelemente 18 gemäß Figur 4 wahlweise nur über einen Teilbereich oder die gesamte Länge der mit den Schneidelementen 18 in Wirkverbindung stehenden Mitnahmerippen 13 erstrecken können.

Aufgrund des sehr unterschiedlich beschaffenen Erntegutes 7, 8 und des in rückwärtiger Richtung der Pflückwalzen 2, 3 abnehmenden, durch die Schneidelemente 18 zu zerkleinernden und zu fördernden Erntegutstromes 7, können sich an den Schneidelementen 18 sehr unterschiedliche Verschleißgrade einstellen, wobei der stärkste Verschleiß im vorderen Bereich der Pflückwalzen 2, 3 zu erwarten ist. Damit nicht stets das gesamte, nur partiell verschlissenen Schneidelement 18 ausgewechselt werden muß, können die Schneidelemente 18 auch aus wenigsten zwei Einzelelementen 18a zusammengesetzt sein, die unabhängig voneinander mittels seperater erfindungsgemäßer Schraub- und/oder Klemmverbindungen 19, 20 auf den Pflückwalzen 2, 3 angeordnet sind und die somit auch unabhängig voneinander ausgetauscht werden können.

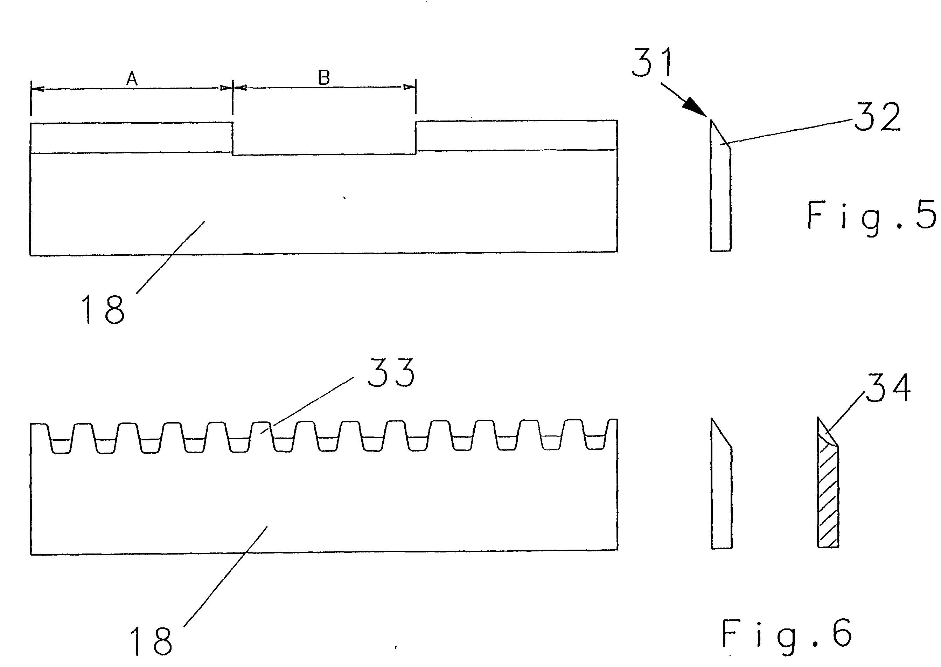

Wird unter bestimmten Einsatzbedingungen ein überwiegendes Quetschen nicht aber ein Zerschneiden des durch die Schneidelemente 18 geförderten Erntegutes 7 gewünscht, können die Schneidelemente 18 in ihrem radial äußeren, die Schneidkante 31 bildenden Bereich gemäß Figur 5 (nur für Schneidelement 18 dargestellt) auch unterbrochen ausgeführt sein, so daß sich schneidende Bereiche A und nicht schneidende Bereiche B ergeben.

Zur Erhöhung der Standzeit der einzelnen Schneidelemente 18 können diese auch in nicht näher dargestellter Weise beidseitig mit einer Schneidkante 31 versehen sein, so daß bei verschleißbedingtem Wechsel ein und dasselbe Schneidelement 18 ein weiters mal verwendet werden kann.

Ebenfalls unter dem Gesichtspunkt der Anpassung der Schneidfunktion an verschiedene Ernteguteigenschaften kann die Schneidkante 31 der Schneidelemente 18 einen keilförmigen aber ebenen Anschliff 32 oder ein reliefartiges Sägezahnprofil 33 oder Kerben 34 aufweisen. Zudem können wenigstens die Schneidkanten 31 der Schneidelemente 18 aus Hartmetall, gehärteten metallischen Werkstoffen, oberflächenharten keramischen Werkstoffen oder aus ebenfalls oberflächenhartem Kunststoff bestehen, wobei die keramischen Werkstoffe und der Kunststoff im einfachsten Fall durch Beschichtung auf einen metallischen Grundkörper, das Schneidelement 18 aufgebracht sind. Kommt ein härtbarer metallischer Werkstoff zum Einsatz, so kann dessen Oberflächenhärte in an sich bekannter Weise durch Flamm-, Induktions- oder Einsatzhärten erzeugt werden, wobei das eine Schneidkante 31 aufweisende Schneidelement 18 je nach gewünschter Elastizität nur oberflächengehärtet oder durchgehärtet ist.

Die offenbarte Erfindung ist nicht auf die dargestellte Ausführung der Pflückwalzen 2, 3 beschränkt. Sie kann auch an nicht näher dargestellten, beliebig gestalteten zylindrischen oder konischen, ein- oder mehrteilig ausgeführten und achsparallel oder zueinander geneigt verlaufenden Pflückorganen, die entweder paarweise mit Gegenwalzen oder einzeln mit festen Gegenhaltern zusammenarbeitend eingesetzt werden, um die beschrieben Effekte zu erzielen. Zudem können die in Achsrichtung 15, 16 der Pflückwalzen 2, 3 verlaufend dargestellten Mitnahmerippen 13 und Schneidelemente 18 auch spiralförmig entlang des jeweiligen Walzengrundkörpers 14 angeordnet sein.

### Bezugszeichenliste

- 1: Pflückeinheit
- 6: Pflückspalt
- 7: Erntegutstengel
- 8: Fruchtstände
- 9: Förderkette
- 10: Förderkette
- 11: Häckseleinrichtung
- 12: Häckselgutstücke
- 13: Mitnahmerippe
- 14: Walzengrundkörper
- 15: Achsrichtung
- 16: Achsrichtung
- 17: Anlagefläche
- 18: Schneidelement
- 18a: Einzelabschnitt des Schneidelementes
- 19: Schraubverbindung
- 20: Klemmverbindung
- 21: Klemmteil
- 22: Senkschraube
- 23: Klemmfläche
- 24: Unterseite
- 25: Klemmfläche
- 26: Achse
- 31: Schneidkante
- 32: keilförmiger Anschliff
- 33: Sägezahnprofil
- 34: Kerbe
- 35: Aussparung
- 36: Radiale

- A: Schneidender Bereich
- B: Nicht schneidender Bereich
- S: Wandstärke
- α: Winkel

## Patentansprüche

1. Vorrichtung zum Pflücken von Fruchtständen Stängeliger Erntegüter wie Mais oder dergleichen, mit wenigstens einer je Pflanzenreihe vorgesehenen ein- oder mehrteilig ausgeführten Pflückwalze, wobei der oder die Walzengrundkörper mit beliebig gestalteten, über wenigstens eine Anlagefläche verfügende Mitnahmerippen versehen sind und wenigstens einer Mitnahmerippe ein mit dieser Mitnahmerippe umlaufendes Schneidelement lösbar zugeordnet ist,
**dadurch gekennzeichnet, daß** das Schneidelement (18) wenigstens teilweise in Drehrichtung des Walzengrundkörpers (2, 3, 14) vor der Anlagefläche (17) angeordnet ist.

2. Vorrichtung zum Pflücken von Fruchtständen stengeliger Erntegüter nach Anspruch 1,
**dadurch gekennzeichnet,**
**daß** die lösbare Verbindung des Schneidelementes (18) mit der Mitnahmerippe (13) durch wenigstens eine das Schneidelement (18) und die Mitnahmerippe (13) durchsetzende Schraubverbindung (19) gebildet wird.

3. Vorrichtung zum Pflücken von Fruchtständen stengeliger Erntegüter nach Anspruch 1,
**dadurch gekennzeichnet,**
**daß** die lösbare Verbindung des Schneidelementes (18) mit der Mitnahmerippe (13) durch eine das Schneidelement (18) gegen die Mitnahmerippe (13) pressende Klemmverbindung (20) gebildet wird.

4. Vorrichtung zum Pflücken von Fruchtständen stengeliger Erntegüter nach Anspruch 3,
**dadurch gekennzeichnet,**
**daß** die Klemmverbindung (20) von einem mit dem Walzengrundkörper (14) verbindbaren Klemmteil (21) gebildet wird, welches über wenigstens eine das Schneidelement (18) gegen die Anlagefläche (17) der Mitnahmerippe (13) pressende Klemmfläche (23) verfügt, die um einen Winkel α gegenüber der Radialen (35) des Walzengrundkörpers (14) geneigt ausgebildet ist.

5. Vorrichtung zum Pflücken von Fruchtständen stengeliger Erntegüter nach Anspruch 4,
**dadurch gekennzeichnet,**
**daß** das Klemmteil (21) eine weitere, mit dem Walzengrundkörper (14) in Wirkverbindung stehenden Klemmfläche (25) aufweist.

6. Vorrichtung zum Pflücken von Fruchtständen stengeliger Erntegüter nach einem oder mehreren der Ansprüche 3 und 4,
**dadurch gekennzeichnet,**
**daß** das Klemmteil (21) über eine Schraubverbindung (22) mit dem Walzengrundkörper (14) verbunden ist und die Befestigungselemente (22) innerhalb der Wandstärke S des Walzengrundkörpers (14) enden.

7. Vorrichtung zum Pflücken von Fruchtständen stengeliger Erntegüter nach Anspruch 5,
**dadurch gekennzeichnet,**
**daß** die Achse (26) der Befestigungselemente (22) zur Radialen (36) des Walzengrundkörpers (14) geneigt angeordnet ist.

8. Vorrichtung zum Pflücken von Fruchtständen stengeliger Erntegüter nach einem oder mehreren der vorhergehenden Ansprüche,
**dadurch gekennzeichnet,**
**daß** der Walzengrundkörper (14) im Bereich des Klemmteils (21) über eine ebene Aussparung (35) verfügt.

9. Vorrichtung zum Pflücken von Fruchtständen stengeliger Erntegüter nach einem oder mehreren der vorhergehenden Ansprüche,
**dadurch gekennzeichnet,**
**daß** sich das Schneidelement (18) wenigstens teilweise oder über die gesamte Länge mindestens einer Mitnahmerippe (13) erstrecken kann.

10. Vorrichtung zum Pflücken von Fruchtständen stengeliger Erntegüter nach einem oder mehreren der vorhergehenden Ansprüche,
**dadurch gekennzeichnet,**
**daß** das Schneidelement (18) wenigstens einer Mitnahmerippe (13) mehrteilig ausgeführt ist und jeder Einzelabschnitt (18a) des Schneidelements (18) unabhängig von den übrigen Einzelabschnitten (18a) des Schneidelements (18) auswechselbar ist.

11. Vorrichtung zum Pflücken von Fruchtständen stengeliger Erntegüter nach einem oder mehreren der vorhergehenden Ansprüche,
**dadurch gekennzeichnet,**
**daß** das Schneidelement (18) wenigstens einer Mitnahmerippe (13) unterbrochen ausgeführt ist, so daß sich entlang einer Mitnahmerippe (13) schneidende Bereiche A und nicht schneidende Bereiche B ergeben.

12. Vorrichtung zum Pflücken von Fruchtständen stengeliger Erntegüter nach einem oder mehreren der vorhergehenden Ansprüche,
**dadurch gekennzeichnet,**
**daß** wahlweise eine, mehrere oder alle Mitnahmerippen (13) wenigstens einer Pflückwalze mit einem oder mehreren Schneidelementen (18) ausgerüstet sind.

13. Vorrichtung zum Pflücken von Fruchtständen stengeliger Erntegüter nach einem oder mehreren der vorhergehenden Ansprüche,
**dadurch gekennzeichnet,**
**daß** die Schneidelemente (18) ein- oder beidseitig eine Schneidkante (31) aufweisen können.

14. Vorrichtung zum Pflücken von Fruchtständen stengeliger Erntegüter nach einem oder mehreren der vorhergehenden Ansprüche 4 bis 13,
**dadurch gekennzeichnet,**
**daß** die mit dem Klemmteil (21) zusammenarbeitende Seite des Schneidelementes (18) zur Radialen (36) des Walzengrundkörpers (14) geneigt angeordnet ist.

15. Vorrichtung zum Pflücken von Fruchtständen stengeliger Erntegüter nach einem oder mehreren der vorhergehenden Ansprüche,
**dadurch gekennzeichnet,**
**daß** die Schneidkante (31) einen keilförmigen Anschliff (32) aufweist.

16. Vorrichtung zum Pflücken von Fruchtständen stengeliger Erntegüter nach einem oder mehreren der vorhergehenden Ansprüche,
**dadurch gekennzeichnet,**
**daß** die Schneidkante (31) reliefartig ausgerührt ist.

17. Vorrichtung zum Pflücken von Fruchtständen stengeliger Erntegüter nach Ansprüch 16,
**dadurch gekennzeichnet,**
**daß** die Reliefartigkeit der Schneidkante (31) durch Kerben (34) oder ein Sägezahnprofil (33) erreicht wird.

18. Vorrichtung zum Pflücken von Fruchtständen stengeliger Erntegüter nach einem oder mehreren der vorhergehenden Ansprüche,
**dadurch gekennzeichnet,**
**daß** die Schneidkante (31) eines Schneidelementes (18) unterbrochen ausgeführt sein kann.

19. Vorrichtung zum Pflücken von Fruchtständen stengeliger Erntegüter nach einem oder mehreren der vorhergehenden Ansprüche,
**dadurch gekennzeichnet,**
**daß** wenigstens die Schneidkante (31) des Schneidelementes (18) oberflächenbeschichtet und/oder gehärtet ausgeführt ist.

20. Vorrichtung zum Pflücken von Fruchtständen stengeliger Erntegüter nach einem oder mehreren der vorhergehenden Ansprüche,
**dadurch gekennzeichnet,**
**daß** wenigstens die Schneidkante (31) des Schneidelementes (18) aus härtbarem metallischen Material oder aus oberflächenharten keramischen Werkstoffen oder aus oberflächenhartem Kunststoff besteht.

## Claims

1. Apparatus for reaping crops of stalked harvest materials such as corn or the like comprising at least one respective reaping drum provided for each row of plants and of a single-part or multi-part construction, wherein the drum main body or bodies are provided with entrainment ribs of any configuration and having at least one contact surface and releasably associated with at least one entrainment rib is a cutting element rotating with said entrainment rib, **characterised in that** the cutting element (18) is at least partially in front of the contact surface (17) in the direction of rotation of the drum main body (2, 3, 14).

2. Apparatus for reaping crops of stalked harvest materials according to claim 1 **characterised in that** the releasable connection of the cutting element (18) to the entrainment rib (13) is formed by at least one screw connection (19) passing through the cutting element (18) and the entrainment rib (13).

3. Apparatus for reaping crops of stalked harvest materials according to claim 1 **characterised in that** the releasable connection of the cutting element (18) to the entrainment rib (13) is formed by a clamping connection (20) pressing the cutting element (18) against the entrainment rib (13).

4. Apparatus for reaping crops of stalked harvest materials according to claim 3 **characterised in that** the clamping connection (20) is formed by a clamping member (21) which can be connected to the drum main body (14) and which has at least one clamping surface (23) which presses the cutting element (18) against the contact surface (17) of the entrainment rib (13) and which is inclined through an angle α with respect to the radial line (35) of the drum main body (14).

5. Apparatus for reaping crops of stalked harvest materials according to claim 4 **characterised in that** the clamping member (21) has a further clamping surface (25) which is operatively connected to the drum main body (14).

6. Apparatus for reaping crops of stalked harvest materials according to one or more of claims 3 and 4 **characterised in that** the clamping member (21) is connected to the drum main body (14) by way of a screw connection (22) and the fixing elements (22) terminate within the wall thickness S of the drum main body (14).

7. Apparatus for reaping crops of stalked harvest materials according to claim 5 **characterised in that** the axis (26) of the fixing elements (22) is arranged inclinedly relative to the radial line (36) of the drum main body (14).

8. Apparatus for reaping crops of stalked harvest materials according to one or more of the preceding claims **characterised in that** the drum main body (14) has a shallow recess (35) in the region of the clamping member (21).

9. Apparatus for reaping crops of stalked harvest materials according to one or more of the preceding claims **characterised in that** the cutting element (18) can extend at least in part or over the entire length of at least one entrainment rib (13).

10. Apparatus for reaping crops of stalked harvest materials according to one or more of the preceding claims **characterised in that** the cutting element (18) of at least one entrainment rib (13) is of a multi-part structure and each individual portion (18a) of the cutting element (18) is replaceable independently of the other individual portions (18a) of the cutting element (18).

11. Apparatus for reaping crops of stalked harvest materials according to one or more of the preceding claims **characterised in that** the cutting element (18) of at least one entrainment rib (13) is of an interrupted design so that cutting regions A and non-cutting regions A are afforded along an entrainment rib (13).

12. Apparatus for reaping crops of stalked harvest materials according to one or more of the preceding claims **characterised in that** selectively one, a plurality of or all entrainment ribs (13) of at least one reaping drum are provided with one or more cutting elements (18).

13. Apparatus for reaping crops of stalked harvest materials according to one or more of the preceding claims **characterised in that** the cutting elements (18) can have a cutting edge (31) at one or both sides.

14. Apparatus for reaping crops of stalked harvest materials according to one or more of preceding claims 4 to 13 **characterised in that** the side of the cutting element (18), which co-operates with the clamping member (21) is arranged inclinedly relative to the radial line (36) of the drum main body (14).

15. Apparatus for reaping crops of stalked harvest materials according to one or more of the preceding claims **characterised in that** the cutting edge (31) has a wedge-shaped grind (32).

16. Apparatus for reaping crops of stalked harvest materials according to one or more of the preceding claims **characterised in that** the cutting edge (31) is of a relief-like nature.

17. Apparatus for reaping crops of stalked harvest materials according to claim 16 **characterised in that** the relief nature of the cutting edge (31) is achieved by notches (34) or a sawtooth profile (33).

18. Apparatus for reaping crops of stalked harvest materials according to one or more of the preceding claims **characterised in that** the cutting edge (31) of a cutting element (18) can be of an interrupted configuration.

19. Apparatus for reaping crops of stalked harvest materials according to one or more of the preceding claims **characterised in that** at least the cutting edge (31) of the cutting element (18) is surface-coated and/or hardened.

20. Apparatus for reaping crops of stalked harvest materials according to one or more of the preceding claims **characterised in that** at least the cutting edge (31) of the cutting element (18) comprises hardenable metallic material or hard-surface ceramic materials or hard-surface plastic material.

## Revendications

1. Dispositif pour récolter sur pied des produits de récolte à tige, tels que du maïs ou similaire, avec au moins un tambour de cueillage en une ou plusieurs parties pour chaque rang de plantes, le ou les corps de tambour étant munis de barrettes d'entraînement de forme quelconque, avec au moins une surface d'appui, et un élément de coupe rotatif étant associé de manière démontable à au moins une desdites barrettes d'entraînement, **caractérisé en ce que** l'élément de coupe (18), au moins partiellement, est disposé devant la surface d'appui (17) vu dans la direction de rotation du corps de tambour (2, 3, 14).

2. Dispositif pour récolter sur pied des produits de récolte à tige, selon la revendication 1, **caractérisé en ce que** la liaison démontable entre l'élément de coupe (18) et la barrette d'entraînement (13) est formée par au moins une liaison à vis (19), qui traverse l'élément de coupe (18) et la barrette d'entraînement (13).

3. Dispositif pour récolter sur pied des produits de récolte à tige, selon la revendication 1, **caractérisé en ce que** la liaison démontable entre l'élément de coupe (18) et la barrette d'entraînement (13) est formée par une liaison à serrage (20), qui presse l'élément de coupe (18) contre la barrette d'entraînement (13).

4. Dispositif pour récolter sur pied des produits de récolte à tige, selon la revendication 3, **caractérisé en ce que** la liaison à serrage (20) est formée d'un élément de serrage (21) pouvant être lié au corps de tambour, avec au moins une surface de serrage (23) qui presse l'élément de coupe (18) contre la surface d'appui (17) de la barrette, laquelle surface de serrage est inclinée d'un angle α par rapport au rayon (35) du corps de tambour (14).

5. Dispositif pour récolter sur pied des produits de récolte à tige, selon la revendication 4, **caractérisé en ce que** l'élément de serrage (21) présente une surface de serrage (25) supplémentaire, qui coopère avec le corps de tambour (14).

6. Dispositif pour récolter sur pied des produits de récolte à tige, selon une ou plusieurs des revendications 3 et 4, **caractérisé en ce que** l'élément de serrage (21) est lié au corps de tambour (14) au moyen d'une liaison à vis (22) et **en ce que** les éléments de fixation (22) se terminent dans l'épaisseur S de la paroi du corps de tambour (14).

7. Dispositif pour récolter sur pied des produits de récolte à tige, selon la revendication 5, **caractérisé en ce que** l'axe (26) des éléments de fixation (22) est incliné par rapport au rayon (36) du corps de tambour (14).

8. Dispositif pour récolter sur pied des produits de récolte à tige, selon une ou plusieurs des revendications précédentes, **caractérisé en ce que** le corps de tambour (14), dans la région de l'élément de serrage (21), est pourvu d'un évidement plan (35).

9. Dispositif pour récolter sur pied des produits de récolte à tige, selon une ou plusieurs des revendications précédentes, **caractérisé en ce que** l'élément de coupe (18) peut s'étendre au partiellement ou sur la totalité de la longueur d'au moins une barrette d'entraînement (13).

10. Dispositif pour récolter sur pied des produits de récolte à tige, selon une ou plusieurs des revendications précédentes, **caractérisé en ce que** l'élément de coupe (18) d'au moins une barrette d'entraînement (13) est réalisé en plusieurs parties et **en ce que** chaque segment élémentaire (18a) de l'élément de coupe (18) peut être remplacé indépendamment des autres segments élémentaires (18a) dudit élément de coupe (18).

11. Dispositif pour récolter sur pied des produits de récolte à tige, selon une ou plusieurs des revendications précédentes, **caractérisé en ce que** l'élément de coupe (18) d'au moins une barrette d'entraînement (13) est discontinu, de sorte que l'on a, le long d'une barrette d'entraînement (13), des zones A coupantes et des zones B non coupantes.

12. Dispositif pour récolter sur pied des produits de récolte à tige, selon une ou plusieurs des revendications précédentes, **caractérisé en ce que** de manière sélective, plusieurs ou toutes les barrettes d'entraînement (13) d'au moins un tambour de cueillage sont équipées d'un ou de plusieurs éléments de coupe (18).

13. Dispositif pour récolter sur pied des produits de récolte à tige, selon une ou plusieurs des revendications précédentes, **caractérisé en ce que** les éléments de coupe (18) peuvent comporter une arête de coupe (31) d'un seul côté ou des deux côtés.

14. Dispositif pour récolter sur pied des produits de récolte à tige, selon une ou plusieurs des revendications 4 à 13 précédentes, **caractérisé en ce que** le côté de l'élément de coupe (18) qui coopère avec l'élément de serrage (21) est incliné par rapport au rayon (36) du corps de tambour (14).

15. Dispositif pour récolter sur pied des produits de récolte à tige, selon une ou plusieurs des revendications précédentes, **caractérisé en ce que** l'arête de coupe (31) est affûtée (32) en biseau.

16. Dispositif pour récolter sur pied des produits de récolte à tige, selon une ou plusieurs des revendications précédentes, **caractérisé en ce que** l'arête de coupe (31) est conformée avec des reliefs.

17. Dispositif pour récolter sur pied des produits de récolte à tige, selon la revendication 16, **caractérisé en ce que** les reliefs de l'arête de coupe (31) sont formés par des encoches (34) ou par un profil en dents-de-scie (33).

18. Dispositif pour récolter sur pied des produits de récolte à tige, selon une ou plusieurs des revendications précédentes, **caractérisé en ce que** l'arête de coupe (31) d'un élément de coupe (18) peut être discontinue.

19. Dispositif pour récolter sur pied des produits de récolte à tige, selon une ou plusieurs des revendications précédentes, **caractérisé en ce qu'**au moins l'arête de coupe (31) de l'élément de coupe (18) est pourvue d'un revêtement de surface et/ou est trempée.

20. Dispositif pour récolter sur pied des produits de récolte à tige, selon une ou plusieurs des revendications précédentes, **caractérisé en ce qu'**au moins l'arête de coupe (31) de l'élément de coupe (18) est réalisée en un matériau métallique trempable ou en des matériaux céramiques à surface dure ou en matière plastique à surface dure.
